# EUROPEAN PATENT APPLICATION

(11) **EP 4 458 895 A1**
(43) Date of publication of application: **06.11.2024**
(21) Application number: 23884961.6
(22) Date of filing: 31.10.2023
(51) Int. Cl.: C08K 9/04, C08K 3/22, C08L 59/02

(54) **ANTIBACTERIAL AGENT, ANTIBACTERIAL HIGH-PERFORMANCE POM COMPOSITE MATERIAL AND PREPARATION METHOD THEREFOR**

(30) Priority: 29.05.2023 CN 202310623211
(71) Applicant: Hefei Genius Advanced Material Co., Ltd., Hefei Anhui 230601 (CN)
(72) Inventor: FEI, Bin, Hefei, Anhui 230601 (CN); YANG, Guisheng, Hefei, Anhui 230601 (CN); YAO, Chenguang, Hefei, Anhui 230601 (CN); JIANG, Chaojie, Hefei, Anhui 230601 (CN); LI, Xiao, Hefei, Anhui 230601 (CN); WU, Anqi, Hefei, Anhui 230601 (CN)
(74) Representative: Kleine, Hubertus
(86) International application number: PCT/CN2023/128895
(87) International publication number: WO 2024/094032

(57) **Abstract**

The present invention discloses an antimicrobial agent, an antimicrobial high-performance POM composite material, and preparation methods thereof, wherein the preparation method of the antimicrobial agent comprises: Preparing a Tris-HCl buffer solution by mixing a tris(hydroxymethyl)aminomethane solution with a HCl solution; Adding the Tris-HCl buffer solution and dopamine hydrochloride, magnesium ions, hydroxide ions and solvent into deionized water, and performing a polymerization reaction to obtain Solution A; Placing solution A, hydrogen peroxide, solvent and deionized water into a reaction vessel, and performing an oxidation reaction to synthesize and obtain PDA@MgO₂ antimicrobial agent. The catechol in polydopamine in the PDA@MgO₂ antimicrobial agent in present application provides highly efficient modification sites, which can bond with multiple substances through its metal chelating effect and various chemical reactions. It has good compatibility, which also improves the dispersion performance of the antimicrobial agent in POM, thus enhancing the antimicrobial performance of POM composite material.

## Description

### TECHNICAL FIELD

The present invention relates to the field of polymer materials, and specifically relates to an antimicrobial agent, an antimicrobial high-performance POM composite material, and a preparation method thereof.

### BACKGROUND

Polyoxymethylene (POM), also known as acetal resin, is a thermoplastic crystalline polymer. POM is an engineering plastic with excellent performance and metal-like hardness, strength and rigidity, and known as "super steel" or "ultra steel". POM is another engineering plastic with excellent overall performance after polyamide. It has high mechanical performance, such as strength, modulus, abrasion resistance, toughness, fatigue and creep resistance, as well as excellent electrical insulation, solvent resistance and processability, and is one of the five major general engineering plastics. However, the physical properties and antimicrobial performance of ordinary POM are limited, which restricts the application of POM composite material in some antimicrobial and high-performance fields.

### SUMMARY

In view of the above, the present invention provides an antimicrobial agent, an antimicrobial high-performance POM composite material and a preparation method thereof, which have excellent physical properties and antimicrobial performance, and extend the application fields of POM composite material.

In order to realize the above objects, the present invention provides the following technical solutions:
A first inventive object of the present invention is to provide a preparation method of an antimicrobial agent, which includes the following steps:
(1) Preparing a Tris-HCl buffer solution by mixing a tris(hydroxymethyl)aminomethane solution with a HCl solution;
(2) Adding the Tris-HCl buffer solution and dopamine hydrochloride, magnesium ions, hydroxide ions and solvent into deionized water, and performing a polymerization reaction to obtain Solution A;
(3) Placing solution A, hydrogen peroxide, solvent and deionized water into a reaction vessel, and performing an oxidation reaction to synthesize and obtain PDA@MgO₂ antimicrobial agent.

In a further embodiment, in step (1), the mass concentration of the tris(hydroxymethyl)aminomethane solution is 10%-20% and the mass concentration of the HCl solution is 30%-40%;
The mass ratio of the tris(hydroxymethyl)aminomethane solution, HCl solution is (40-60): (30-40); the mixing is performed by stirring at room temperature for 6-8h.

In a further embodiment, in step (2), the magnesium ion is magnesium nitrate, magnesium phosphate, or magnesium sulfate, the hydroxide ion is aqueous ammonia, sodium hydroxide, or potassium hydroxide, and the solvent is anhydrous ethanol, acetone, or isopropanol;

The mass ratio of the Tris-HCl buffer solution, dopamine hydrochloride, magnesium ions, hydroxide ions, solvent, and deionized water is (40-60): (30-40): (20-24): (18-24): (50-70): (60-80); and the polymerization reaction is conducted at a temperature of 60°C-80°C and for a duration of 8h -12h.

In a further embodiment, in step (3), the solvent is anhydrous ethanol, acetone or isopropanol;
The mass ratio of the solution A, hydrogen peroxide, solvent, and deionized water is (60-70):(20-30):(40-60):(50-70), and the oxidation reaction is conducted at a temperature of 60-80°C and for a duration of 8-12h.

A second inventive object of the present invention is to provide an antimicrobial agent which is a PDA@MgO₂ antimicrobial agent prepared by the preparation method described above.

A third inventive object of the present invention is to provide an antimicrobial high-performance POM composite material, which is prepared from the following components based on weight parts:
POM 80-100 parts;
an antimicrobial agent 4-6 parts;
modified basic magnesium chloride whiskers 10-16 parts;
an antioxidant 0.1-0.5 parts;
wherein the antimicrobial agent is the aforementioned PDA@MgO₂ antimicrobial agent.

In a further embodiment, the modified basic magnesium chloride whiskers are prepared as follows:
putting basic magnesium chloride whiskers into a plasma chamber, passing argon plasma, and reacting for 10-16h to obtain the modified basic magnesium chloride whisker.

In a further embodiment, the antioxidant is at least one of antioxidant 168, antioxidant 1010 and antioxidant 1330.

A fourth inventive object of the present invention is to provide a preparation method for preparing the antimicrobial high-performance POM composite material described above, which comprises the following steps:
weighing POM, the antimicrobial agent, the modified basic magnesium chloride whisker and an antioxidant based on weight parts, mixing and stirring evenly to obtain a mixture;
adding the mixture to a twin-screw extruder for extrusion and granulation to obtain the antimicrobial high-performance POM composite material.

In a further embodiment, the twin-screw extruder comprises six temperature zones arranged in sequence, wherein the temperature of the first zone is 160 °C to 180°C, the temperature of the second zone is 200°C to 220°C, the temperature of the third zone is 200°C to 220°C, the temperature of the fourth zone is 200°C to 220°C, the temperature of the fifth zone is 200°C to 220°C, and the temperature of the sixth zone is 200°C to 220°C;
The head temperature of the twin-screw extruder is 200°C to 220°C, and the screw rotation speed is 200 r/min to 280r/min.

Compared with the prior art, the beneficial effects of the present invention are:
1. PDA nanoparticles absorb a layer of Mg²⁺ on the surface by the chelating effect and electrostatic adsorption of polydopamine with Mg²⁺, and then the absorbed Mg²⁺ further reacted by the addition of hydrogen peroxide on the surface of PDA nanoparticles to synthesize MgO₂ nanoparticles, thereby obtaining PDA@MgO₂ antimicrobial agent. The specific equations are as follows:

   PAD+ Mg(NO₃)₂-PDA@ Mg²⁺

   wherein the molecular structural formula of PDA@ Mg²⁺ is as follows:

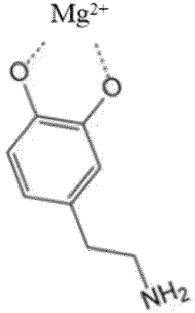

   PDA@ Mg²⁺+ H₂O₂-PDA@MgO₂
2. The antimicrobial performance of the PDA@MgO₂ antimicrobial agent prepared by the present invention are as follows:
   Firstly, it can react with water vapor in the air to generate H₂O₂. H₂O₂ is an easily available reactive oxygen that can modify the structures of important biomolecules, such as lipids, proteins, and DNA, through chemical reactions, which in turn interferes with the metabolism of bacteria and ultimately kills bacteria;
   Secondly, it can dissociate Mg⁺ having some antibacterial effects.
3. The catechol in polydopamine in PDA@MgO₂ antimicrobial agent provides highly efficient modification sites, which can bond with multiple substances through its metal chelating effect and various chemical reactions. It has good compatibility, which also improves the dispersion performance of the antimicrobial agent in POM, thus enhancing the antimicrobial performance of POM composite material.
4. Basic magnesium chloride whiskers are high-energy impacted by the use of plasma on the surface, so that oxygen-containing reactive groups are further added to their molecular structures. The addition thereof into POM improves the interfacial compatibility between the basic magnesium chloride whiskers and POM, which also further improves the physical properties of POM.

### DETAILED DESCRIPTION OF THE EMBODIMENTS

In order to facilitate understanding of the present invention, the invention will be described more fully below in connection with specific embodiments. However, the present invention can be realized in many different forms and is not limited to the embodiments described herein. Rather, these embodiments are provided to enable a more thorough and comprehensive understanding of the disclosure of the present invention.

Specific information on the ingredients used in the following examples and comparative examples are as follows, but they are not limited thereto, and they are merely shown as examples. The invention can still be realized with products produced by other manufacturers.
POM, model M90-44, Japan Polyplastics Co;
Tris solution, Hubei Kewode Chemical Co;
HCl solution, produced from Beijing Haifuda Technology Co;
Dopamine hydrochloride, produced from Hubei Ruiboxin Chemical Co;
Magnesium nitrate, produced from Shanxi Dongxing Chemical Co;
Aqueous ammonia, produced by Jinan Chuangtong Chemical Co;
Anhydrous ethanol, produced from Changzhou Runcheng Chemical Co;
Deionized water, produced from Jinan Deqiao Chemical Technology Co;
Hydrogen peroxide, produced from Jinan Kunfeng Chemical Co;
Basic magnesium chloride whisker, produced from Hebei Meixi Biological Co;
Antioxidant, model Irganox168, Irganox1010, Irganox1330, all produced from BASF Germany.
Chitosan micropowder, Shaanxi Beichuan Biotechnology Co.

### Preparation example 1: Preparation of PDA@MgO₂ antimicrobial agent

(1) 400 g of Tris solution (tris(hydroxymethyl)aminomethane solution, mass concentration of 20%) and 300 g of HCl solution (mass concentration of 40%) were weighed and placed in a reaction vessel, and stirred at room temperature for 6 h to produce a Tris-HCl buffer solution (mass concentration of 50%);
(2) 400 g of Tris-HCl buffer solution, 300 g of dopamine hydrochloride, 200 g of magnesium nitrate, 180 g of aqueous ammonia, 500 g of anhydrous ethanol, and 600 g of deionized water were weighed and placed in a reaction vessel, and reacted at 60°C for 8 h to obtain Solution A;
(3) 600g of solution A, 200g of hydrogen peroxide, 400g of anhydrous ethanol, and 500g of deionized water were weighed and placed in a reaction vessel, and reacted at 60°C for 8h, and the product of the reaction was filtered, washed, and dried to obtain PDA@MgO₂ antimicrobial agent M1.

### Preparation example 2: Preparation of modified basic magnesium chloride whisker

Basic magnesium chloride whiskers were placed into a plasma chamber, and reacted for 10h with argon plasma passing through, to obtain modified basic magnesium chloride whiskers N1.

### Example 1: Preparation of antimicrobial high-performance POM composite material

(1) 80 parts of POM, 4 parts of antimicrobial agent M1, 10 parts of modified basic magnesium chloride whiskers N1, and 0.1 part of Irganox 1010 were weighed, mixed and stirred evenly to obtain a mixture;
(2) the mixture obtained in step (1) was extruded and granulated from an extruder to obtain the POM composite material P1.

Wherein, the temperatures of each zone of the twin-screw extruder and the screw rotation speed were as follows: the temperature of the first zone was 160°C, the temperature of the second zone was 200°C, the temperature of the third zone was 200°C, the temperature of the fourth zone was 200°C, the temperature of the fifth zone was 200°C, the temperature of the sixth zone was 200°C, the temperature of the head was 200°C, and the screw rotation speed was 200 r/min.

### Preparation Example 3

(1) 600 g of Tris solution (tris(hydroxymethyl)aminomethane solution, mass concentration of 10%) and 400 g of HCl solution (mass concentration of 30%) were weighed and placed in a reaction vessel, stirred at room temperature for 8h to produce Tris-HCl buffer solution (mass concentration of 40%);
(2) 600 g of Tris-HCl buffer solution, 400 g of dopamine hydrochloride, 240 g of magnesium nitrate (Mg(NO₃)₂), 240 g of aqueous ammonia, 700 g of anhydrous ethanol, and 800 g of deionized water were weighed and placed in a reaction vessel, and reacted at 80°C for 12 h to obtain Solution A;
(3) 700g of solution A, 300g of hydrogen peroxide, 600g of anhydrous ethanol, 700g of deionized water were weighed and placed in a reaction vessel, and reacted at 80°C for 12h, and the product of the reaction was filtered, washed and dried to obtain PDA@MgO₂ antimicrobial agent M2.

### Preparation Example 4

Basic magnesium chloride whiskers were placed into a plasma chamber, and reacted for 16h with argon plasma passing through, to obtain modified basic magnesium chloride whiskers N2.

### Example 2

(1) 100 parts of POM, 6 parts of antimicrobial agent M2, 16 parts of modified basic magnesium chloride whiskers N2, 0.1 part of Irganox 1010, 0.2 part of Irganox 168, 0.2 part of Irganox 1330 were weighed, mixed and stirred evenly to obtain a mixture;
(2) the mixture obtained in step (1) was extruded and granulated from an extruder to obtain a POM composite material P2.

Wherein, the temperatures of each zone of the twin-screw extruder and the screw rotation speed were as follows: the temperature of the first zone was 180°C, the temperature of the second zone was 210°C, the temperature of the third zone was 210°C, the temperature of the fourth zone was 210°C, the temperature of the fifth zone was 210°C, the temperature of the sixth zone was 210°C, the temperature of the head was 210°C, and the screw rotation speed was 280 r/min.

### Preparation Example 5

(1) 500g of Tris solution (tris(hydroxymethyl)aminomethane solution, with a mass concentration of 20%) and 350g of HCl solution (with a mass concentration of 40%) were weighed and placed in a reaction vessel and stirred at room temperature for 7h to produce Tris-HCl buffer solution (with a mass concentration of 50%);
(2) 500 g of Tris-HCl buffer solution, 350 g of dopamine hydrochloride, 220 g of magnesium sulfate, 210 g of sodium hydroxide, 600 g of acetone, and 700 g of deionized water were weighed and placed in a reaction vessel, and reacted at 70°C for 10 h to obtain Solution A.
(3) 650 g of solution A, 250 g of hydrogen peroxide, 500 g of isopropanol, 600 g of deionized water were weighed and placed in a reaction vessel, and reacted at 70°C for 10h, and the product of the reaction was filtered, washed and dried to obtain PDA@MgO₂ antimicrobial agent M3.

### Preparation Example 6

Basic magnesium chloride whiskers were placed into a plasma chamber and reacted for 13h with argon plasma passing through, to obtain modified basic magnesium chloride whiskers N3.

### Example 3

(1) 90 parts of POM, 5 parts of antimicrobial agent M3, 13 parts of modified basic magnesium chloride whiskers N3, 0.1 part of Irganox 168, and 0.2 part of Irganox 1010 were weighed, mixed and stirred evenly to obtain a mixture;
(2) the mixture obtained in step (1) was extruded and granulated from an extruder to obtain a POM composite material P3.

Wherein, the temperatures of each zone of the twin-screw extruder and the screw rotation speed were as follows: the temperature of the first zone was 180°C, the temperature of the second zone was 200°C, the temperature of the third zone was 200°C, the temperature of the fourth zone was 200°C, the temperature of the fifth zone was 200°C, the temperature of the sixth zone was 200°C, the temperature of the head was 200°C, and the screw rotation speed was 240 r/min.

### Preparation Example 7

(1) 450 g of Tris solution (tris(hydroxymethyl)aminomethane solution, with a mass concentration of 20%) and 380 g of HCl solution (with a mass concentration of 40%) were weighed and placed in a reaction vessel, and stirred at room temperature for 8h to produce Tris-HCl buffer solution (with a mass concentration of 40%);
(2) 580 g of Tris-HCl buffer solution, 390 g of dopamine hydrochloride, 235 g of magnesium nitrate (Mg(NO₃)₂), 215 g of aqueous ammonia, 625 g of anhydrous ethanol, and 735 g of deionized water were weighed and placed in a reaction vessel, and react at 75°C for 11h to obtain Solution A;
(3) 665 g of solution A, 285 g of hydrogen peroxide, 555 g of anhydrous ethanol, and 685 g of deionized water were weighed and placed in a reaction vessel, and reacted at 68°C for 12 h, and the product of the reaction was filtered, washed and dried, to obtain PDA@MgO₂ antimicrobial agent M4.

### Preparation Example 8

Basic magnesium chloride whiskers were placed into a plasma chamber and reacted for 15h with argon plasma passing through, to obtain modified basic magnesium chloride whiskers N4.

### Example 4

(1) 85 parts of POM, 4 parts of antimicrobial agent M4, 14 parts of modified basic magnesium chloride whiskers N4, 0.1 part of Irganox 1010, and 0.2 part of Irganox 1330 were weighed, mixed and stirred evenly to obtain a mixture;
(2) the mixture obtained in step (1) was extruded and granulated from an extruder to obtain a POM composite material P4.

Wherein, the temperatures of each zone of the twin-screw extruder and the screw rotation speed were as follows: the temperature of the first zone was 175°C, the temperature of the second zone was 210°C, the temperature of the third zone was 210°C, the temperature of the fourth zone was 210°C, the temperature of the fifth zone was 210°C, the temperature of the sixth zone was 210°C, the temperature of the head was 210°C, and the screw rotation speed was 230 r/min.

### Preparation Example 9

(1) 480 g of Tris solution (tris(hydroxymethyl)aminomethane solution, with a mass concentration of 20%) and 365 g of HCl solution (with a mass concentration of 40%) were weighed and placed in a reaction vessel, and stirred at room temperature for 8 h to produce Tris-HCl buffer solution (with a mass concentration of 50%);
(2) 555 g of Tris-HCl buffer solution, 395 g of dopamine hydrochloride, 225 g of magnesium nitrate (Mg(NO₃)₂), 215 g of aqueous ammonia, 655 g of anhydrous ethanol, and 735 g of deionized water were weighed and placed in a reaction vessel, and reacted at 75°C for 11h, to obtain Solution A.
(3) 615 g of solution A, 275 g of hydrogen peroxide, 545 g of anhydrous ethanol, 515 g of deionized water were weighed and placed in a reaction vessel, reacted at 77°C for 11h, and the product of the reaction was filtered, washed and dried, to obtain PDA@MgO₂ antimicrobial agent M5.

### Preparation Example 10

Basic magnesium chloride whiskers were placed into a plasma chamber and reacted for 12h with argon plasma passing through, to obtain modified basic magnesium chloride whiskers N5.

### Example 5

(1) 95 parts of POM, 5 parts of antimicrobial agent M5, 15 parts of modified basic magnesium chloride whiskers N5, 0.1 part of Irganox 1010, and 0.1 part of Irganox 168 were weighed, mixed and stirred evenly to obtain a mixture;
(2) the mixture obtained in step (1) was extruded and granulated from an extruder to obtain a POM composite material P5.

Wherein, the temperatures of each zone of the twin-screw extruder and the screw rotation speed were as follows: the temperature of the first zone was 175 °C, the temperature of the second zone was 205 °C, the temperature of the third zone was 205 °C, the temperature of the fourth zone was 205 °C, the temperature of the fifth zone was 205 °C, the temperature of the sixth zone was 205 °C, the head temperature was 205 °C, and the screw rotation speed was 255 r/min.

### Comparative example 1

(1) 100 parts of POM, 0.1 part of Irganox 1010, 0.2 part of Irganox 168 were weighed, mixed and stirred evenly to obtain a mixture;
(2) the mixture obtained in step (1) was extruded and granulated from an extruder to obtain a POM composite material D1.

Wherein, the temperatures of each zone of the twin-screw extruder and the screw rotation speed were as follows: the temperature of the first zone was 175°C, the temperature of the second zone was 205°C, the temperature of the third zone was 205°C, the temperature of the fourth zone was 205°C, the temperature of the fifth zone was 205°C, the temperature of the sixth zone was 205°C, the temperature of the head was 205°C, and the screw rotation speed was 235 r/min.

### Comparative example 2

(1) 100 parts of POM, 16 parts of basic magnesium chloride whiskers, 0.1 part of Irganox 1010, 0.2 parts of Irganox 168 were weighed, mixed and stirred evenly to obtain a mixture;
(2) the mixture obtained in step (1) was extruded and granulated from an extruder to obtain a POM composite material D2.

Wherein, the temperatures of each zone of the twin-screw extruder and the screw rotation speed were as follows: the temperature of the first zone was 175°C, the temperature of the second zone was 205°C, the temperature of the third zone was 205°C, the temperature of the fourth zone was 205°C, the temperature of the fifth zone was 205°C, the temperature of the sixth zone was 205°C, the temperature of the head was 205°C, and the screw rotation speed was 235 r/min.

### Comparative example 3

(1) 95 parts of POM, 5 parts of antimicrobial agent chitosan micropowder, 15 parts of modified basic magnesium chloride whiskers N5, 0.1 part of Irganox 1010, 0.1 part of Irganox 168were weighed, mixed and stirred evenly to obtain a mixture;
(2) the mixture obtained in step (1) was extruded and granulated from an extruder to obtain a POM composite material D3.

Wherein, the temperatures of each zone of the twin-screw extruder and the screw rotation speed were as follows: the temperature of the first zone was 175°C, the temperature of the second zone was 205°C, the temperature of the third zone was 205°C, the temperature of the fourth zone was 205°C, the temperature of the fifth zone was 205°C, the temperature of the sixth zone was 205°C, the temperature of the head was 205°C, and the screw rotation speed was 255 r/min.

### Comparative example 4

(1) 95 parts of POM, 15 parts of modified basic magnesium chloride whiskers N5, 0.1 part of Irganox 1010, 0.1 part of Irganox 168 were weighed, mixed and stirred to obtain a mixture;
(2) the mixture obtained in step (1) was extruded and granulated from an extruder to obtain a POM composite material P5.

Wherein, the temperatures of each zone of the twin-screw extruder and the screw rotation speed were as follows: the temperature of the first zone was 175°C, the temperature of the second zone was 205°C, the temperature of the third zone was 205°C, the temperature of the fourth zone was 205°C, the temperature of the fifth zone was 205°C, the temperature of the sixth zone was 205°C, the temperature of the head was 205°C, and the screw rotation speed was 255 r/min.

### Comparative example 5

(1) 95 parts of POM, 5 parts of antimicrobial agent M5, 0.1 part of Irganox 1010, 0.1 part of Irganox 168 were weighed, mixed and stirred evenly to obtain a mixture;
(2) the mixture obtained in step (1) was extruded and granulated from an extruder to obtain a POM composite material P5.

Wherein, the temperatures of each zone of the twin-screw extruder and the screw rotation speed were as follows: the temperature of the first zone was 175°C, the temperature of the second zone was 205°C, the temperature of the third zone was 205°C, the temperature of the fourth zone was 205°C, the temperature of the fifth zone was 205°C, the temperature of the sixth zone was 205°C, the head temperature was 205°C, and the screw rotation speed was 255 r/min.

The POM composite material prepared by the above Examples 1-5 and comparative examples 1-5 were made into sample strips for testing with an injection molding machine, and the test data are shown in the following table:

| Test Item | Tensile strength | Flexural modulus | Cantilever beam notched impact strength | Antimicrobial rate | |
|---|---|---|---|---|---|
| Test Content | / | / | / | Staphylococcus aureus | Escherichia coli |
| Test Standard | GB/T1040.1/2 | GB/T 9341 | GB/T 1843 | JIS Z 2801 | JIS Z 2801 |
| Unit | MPa | MPa | kJ/m² | % | % |
| P1 | 47.1 | 2780 | 5.7 | 98.8 | 99.2 |
| P2 | 47.7 | 2670 | 5.2 | 99.9 | 99.5 |
| P3 | 46.6 | 2630 | 6.1 | 99.8 | 98.5 |
| P4 | 47.3 | 2510 | 5.6 | 99.6 | 98.7 |
| P5 | 46.5 | 2620 | 5.8 | 99.9 | 98.9 |
| D1 | 37.2 | 1720 | 4.1 | 19.8 | 18.7 |
| D2 | 41.2 | 2220 | 4.6 | 19.7 | 20.1 |
| D3 | 46.8 | 2620 | 5.2 | 95.6 | 96.3 |
| D4 | 47.3 | 2710 | 5.5 | 19.8 | 18.8 |
| D5 | 38.1 | 1810 | 4.0 | 98.9 | 99.1 |

From the above table, it can be seen that the mechanical properties and antimicrobial performance of the composite material prepared in Examples 1-5 are better than those of Comparative Examples 1-5.

Compared with Example 5, the antimicrobial agent M5 was not added in Comparative Example 4, resulting in an antimicrobial rate of the material of only 19%. The modified basic magnesium chloride whiskers N5 were not added in Comparative Example 5, resulting in a significant reduction in the mechanical properties of the material. The antimicrobial agent chitosan micropowder was added in Comparative Example 3, but the antimicrobial rate was still lower than that of Example 5. From the above analysis, it can be seen that the PDA@MgO₂ antimicrobial agent and basic magnesium chloride whiskers in the present application can significantly improve the mechanical properties and antimicrobial performance of POM composites.

It can be understood that the above raw material reagents are only examples of some specific embodiments of the present invention, which make the technical solution of the present invention clearer, and do not mean that the present invention can only use the above reagents, and the specific scope of the claims shall prevail. In addition, the "parts" mentioned in the Examples and Comparative Examples refer to weight parts unless otherwise indicated.

The above are only preferred examples of the present application, and is not intended to limit the scope of the present application; that is, all kinds of equivalent transformations made in accordance with the scope of the claims of the present application are within the scope of protection of the claims of the present application.

## Claims

1. A preparation method of an antimicrobial agent, **characterized in that** it comprises the following steps:
(1) Preparing a Tris-HCl buffer solution by mixing a tris(hydroxymethyl)aminomethane solution with a HCl solution;
(2) Adding the Tris-HCl buffer solution and dopamine hydrochloride, magnesium ions, hydroxide ions and solvent into deionized water, and performing a polymerization reaction to obtain Solution A;
(3) Placing solution A, hydrogen peroxide, solvent and deionized water into a reaction vessel, and performing an oxidation reaction to synthesize and obtain PDA@MgO₂ antimicrobial agent.

2. The preparation method according to claim 1, **characterized in that** in step (1), the mass concentration of the tris(hydroxymethyl)aminomethane solution is 10%-20% and the mass concentration of the HCl solution is 30%-40%;
the mass ratio of the tris(hydroxymethyl)aminomethane solution and HCl solution is (40-60): (30-40); and the mixing is conducted by stirring at room temperature for 6-8h.

3. The preparation method according to claim 1, **characterized in that**, in step (2), the magnesium ion is magnesium nitrate, magnesium phosphate or magnesium sulfate, the hydroxide ion is aqueous ammonia, sodium hydroxide or potassium hydroxide, and the solvent is anhydrous ethanol, acetone or isopropanol;
the mass ratio of the Tris-HCl buffer solution, dopamine hydrochloride, magnesium ions, hydroxide ions, solvent and deionized water is (40-60): (30-40): (20-24): (18-24): (50-70): (60-80); and
the polymerization reaction is conducted at a temperature of 60°C-80°C and for a duration of 8h -12h.

4. The preparation method according to claim 1, **characterized in that** in step (3), the solvent is anhydrous ethanol, acetone or isopropanol;
the mass ratio of the solution A, hydrogen peroxide, solvent and deionized water is (60-70):(20-30):(40-60):(50-70), and the oxidation reaction is conducted at a temperature of 60-80°C and for a duration of 8-12h.

5. An antimicrobial agent, **characterized in that**, it is a PDA@MgO₂ antimicrobial agent prepared by the preparation method according to any one of claims 1 to 4.

6. An antimicrobial high-performance POM composite material, **characterized in that**, it is prepared from the following components based on weight parts:
POM 80-100 parts;
an antimicrobial agent 4-6 parts;
Modified basic magnesium chloride whiskers 10-16 parts;
an antioxidant 0.1-0.5 parts;
wherein the antimicrobial agent is the PDA@MgO₂ antimicrobial agent according to claim 5.

7. The antimicrobial high-performance POM composite material according to claim 6, **characterized in that**, the modified basic magnesium chloride whiskers are prepared as follows:
putting basic magnesium chloride whiskers into a plasma chamber, passing argon plasma, and reacting for 10-16h to obtain the modified basic magnesium chloride whiskers.

8. The antimicrobial high-performance POM composite material according to claim 6, **characterized in that** the antioxidant is at least one of antioxidant 168, antioxidant 1010 and antioxidant 1330.

9. A preparation method for preparing the antimicrobial high-performance POM composite material according to any one of claims 6 to 8, **characterized in that** it comprises the following steps:
weighing POM, the antimicrobial agent, the modified basic magnesium chloride whiskers and the antioxidant based on weight parts, mixing and stirring evenly to obtain a mixture;
adding the mixture to a twin-screw extruder for extrusion and granulation to obtain the antimicrobial high-performance POM composite material.

10. The preparation method according to claim 9, **characterized in that** the twin-screw extruder comprises six temperature zones arranged in sequence, wherein the temperature of the first zone is 160 °C to 180°C, the temperature of the second zone is 200°C to 220°C, the temperature of the third zone is 200°C to 220°C, the temperature of the fourth zone is 200°C to 220°C, the temperature of the fifth zone is 200°C to 220°C, and the temperature of the sixth zone is 200°C to 220°C;
the head temperature of the twin-screw extruder is 200°C to 220°C, and the screw rotation speed is 200 r/min to 280r/min.
